Europäisches Patentamt

(19) European Patent Office

Office européen des brevets

(11) Numéro de publication : **0 072 731 B1**

(12) **FASCICULE DE BREVET EUROPÉEN**

(45) Date de publication du fascicule du brevet :
12.11.86

(21) Numéro de dépôt : 82401455.9

(22) Date de dépôt : 03.08.82

(51) Int. Cl.⁴ : **B 62 D 5/08**

(54) Distributeur hydraulique à réaction sur organe de commande.

(30) Priorité : 04.08.81 ES 505158

(43) Date de publication de la demande :
23.02.83 Bulletin 83/08

(45) Mention de la délivrance du brevet :
12.11.86 Bulletin 86/46

(84) Etats contractants désignés :
DE FR GB IT

(56) Documents cités :
EP-A- 0 011 036
EP-A- 0 021 970
EP-A- 0 066 507
FR-A- 2 435 380
GB-A- 2 041 303

(73) Titulaire : **BENDIX ESPANA S.A.**
**Balmes 243**
**Barcelona 6 (ES)**

(72) Inventeur : **Bacardit, Juan Simon**
**Calle Mallorca 451**
**Barcelona 13 (ES)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

## Description

La présente invention concerne les distributeurs hydrauliques et, plus particulièrement, ceux utilisés pour contrôler le fonctionnement d'un servomoteur d'assistance à divers mécanismes, par exemple le système de direction d'un véhicule, en fonction de la position d'un organe de commande d'entrée, par exemple le volant de direction dudit véhicule.

Il existe divers types de distributeurs qui accomplissent une telle fonction et qui sont basés sur l'emploi de deux éléments coopérants déplaçables l'un par rapport à l'autre, reliés respectivement à un organe de commande récepteur de l'effort d'actionnement de commande et à un mécanisme commandé, et définissant entre eux une interface où sont formées des lumières et des passages communiquant avec une arrivée et un retour de fluide moteur et avec les deux extrémités du servomoteur d'assistance, de manière que le mouvement relatif des deux organes détermine une différence de pression modulable entre les deux extrémités du servomoteur.

On connaît des distributeurs de ce genre dans lesquels l'interface entre les deux organes se présente soit sous une forme cylindrique, avec des rainures et cavités longitudinales, soit sous une forme discoïde ou en étoile. Dans tous les cas, ces distributeurs sont agencés de façon à comprendre au moins un circuit établissant une communication entre une source de fluide sous pression et un retour ou une bâche, et incluant au moins deux moyens de valve en série, actionnés simultanément par un dispositif de commande, la sortie d'un premier de ces moyens de valve étant reliée à une extrémité correspondante d'un moteur hydraulique d'assistance commandé par le distributeur, la sortie d'un second moyen de valve étant reliée à un dispositif de réaction hydraulique appliquant une réaction au dispositif de commande, de façon à définir une caractéristique pression-couple avec une portion de courbe initiale de pression d'assistance sensiblement nulle et une portion de courbe suivante de pression d'assistance approximativement proportionnelle au couple (ou à la force) appliqué à l'organe de commande.

De cette façon, dans le cas particulier d'un mécanisme de direction assistée, le conducteur dispose d'une information sur l'effort d'actionnement développé par le servomécanisme. En général, la conception du distributeur est telle que la caractéristique de réaction ne commence pas avant une certaine distance déterminée du point zéro ou position neutre du distributeur, afin de rendre la conduite plus commode. L'expérience a toutefois montré qu'il s'avère utile de pouvoir faire varier, dans des conditions de conduite déterminées, la position de la caractéristique de réaction dans le diagramme pression/couple ou, en d'autres termes, de faire en sorte que la réaction puisse commencer à toute distance désirée de la position neutre.

Tel est l'objet de la présente invention, qui prévoit à cet effet l'aménagement, dans un distributeur hydraulique, notamment pour système de direction assistée de véhicule, du type comprenant deux éléments coopérants déplaçables l'un par rapport à l'autre sous l'action d'un organe de commande et définissant au moins un circuit modulable établissant une communication entre une source de fluide sous pression et une bâche, ce circuit comprenant en série un premier, un second et un troisième moyens de valve actionnés simultanément lors du déplacement relatif entre les deux éléments, la sortie du premier moyen de valve étant reliée à une extrémité d'un moteur hydraulique contrôlé par le distributeur, et la sortie du second moyen de valve étant reliée à des moyens hydrauliques d'application d'une réaction sur l'organe de commande fournissant une caractéristique pression d'actionnement du moteur hydraulique/couple de commande appliqué à l'organe de commande avec une première portion initiale de pente nulle et une seconde portion suivante à pente déterminée (document EP-A-066507, publié le 8.12.1982 — Etat de la technique selon Article 54.3 de la CBE), en parallèle avec le second moyen de valve, d'un quatrième moyen de valve modulable commandé par des moyens de commande extérieurs additionnels de façon à modifier sélectivement la position du point de transition entre les première et seconde portions de la caractéristique.

On a constaté qu'il était également utile de pouvoir faire varier, afin de l'adapter à différentes caractéristiques de conduite ou du véhicule, la pente de ladite seconde portion de réaction proportionnelle de la caractéristique pression/couple. Dans ce but, conformément à une caractéristique additionnelle de l'invention, un cinquième moyen de valve est disposé en série entre la sortie du premier moyen de valve et l'entrée du second moyen de valve et actionné lors du déplacement relatif entre les deux éléments du distributeur de manière à déterminer la pente d'une troisième portion terminale de la caractéristique pression/couple à partir d'une valeur déterminée de l'effort appliqué au dispositif de commande du distributeur.

En variante, on connaît également des distributeurs offrant une telle troisième zone de la caractéristique couple/pression à pente prédéterminée, fournie, par exemple, par des organes élastiques de dimensions appropriées, ceci s'avérant utile quand la direction fonctionne en fin de course, c'est-à-dire dans des courbes accentuées, ou dans des conditions de manœuvre de parking. Pour les mêmes raisons que celles qui ont été exposées plus haut, il est bon, dans ce cas également, de disposer d'une possibilité de faire varier la position de cette troisième portion de la caractéristique, et donc de la portion de courbe correspondante située immédiatement avant celle-ci. Donc, conformément à une autre caractéristique de l'invention, on incorpore en parallèle avec le troisième moyen de valve un sixième moyen de valve extérieur commandé de l'extérieur afin de modifier la pente de la seconde portion de la caractéristique pression/couple du distributeur.

Evidemment, l'invention comprend également l'utilisation conjointe des deux moyens de valves supplémentaires qui sont actionnés indépendamment de manière à pouvoir modifier en même temps et de la façon désirée les différentes portions de la caractéristique du distributeur.

Dans un mode de réalisation préférentiel de l'invention, le distributeur hydraulique, du type où les deux éléments coopérants sont constitués respectivement d'un rotor en étoile disposé dans une cavité discoïde formée dans un stator, le rotor étant couplé à l'organe de commande, des bords coopérants d'évidements formés dans les faces en regard du rotor et du stator formant des étranglements constituant lesdits premier, second et troisième moyens de valves, est caractérisé en ce que le rotor comprend des branches de réaction séparant deux chambres de réaction, chacune délimitée du côté opposé par une branche intermédiaire associée à une lumière de passage intermédiaire du stator, le quatrième moyen de valve extérieur étant interposé dans un circuit reliant la chambre de réaction et la lumière de passage intermédiaire adjacente.

Dans certaines constructions de ce type de distributeur, le stator pivote dans un boîtier fixé au mécanisme de direction avec un mouvement limité et sollicité vers une position centrale ou neutre au moyen d'organes élastiques. Dans ce cas, selon l'invention, le stator est doté d'une saillie radiale mobile entre deux butées fixes du boîtier et les organes élastiques sont constitués par un ressort en C dont les extrémités sont appliquées contre les côtés opposés de la saillie du stator et d'une butée de centrage fixée au boîtier, le ressort fournissant la réaction pour la troisième portion de la caractéristique correspondant aux pressions de commande plus élevées du vérin de servocommande.

D'autres caractéristiques et avantages de l'invention ressortiront de la description suivante des modes de réalisation non limitatifs, faite en relation avec les dessins annexés, sur lesquels :

la figure 1 est un schéma symbolique d'un premier système de servo-assistance qui comprend un distributeur hydraulique selon l'invention ;

la figure 2 est le diagramme de la courbe caractéristique pression d'actionnement d'assistance de sortie du distributeur en fonction du couple de commande d'entraînement appliqué à celui-ci ;

la figure 3 est une coupe transversale d'un distributeur avec rotor en étoile, construit conformément au schéma de la figure 1 et représenté en position centrale de repos ;

les figures 4, 5, 6 et 7 sont des schémas développés suivant la coupe IV-IV de la figure 3 et qui correspondent à différentes positions de fonctionnement du distributeur ;

la figure 8 est un schéma similaire à la figure 1 relatif à une variante de l'invention ;

la figure 9 est le diagramme des caractéristiques pression/couple obtenu lors du fonctionnement du distributeur correspondant ;

la figure 10 est l'équivalent de la figure 3 et montre l'agencement d'une valve en étoile conformément au schéma de la figure 8 ;

les figures 11 à 15 sont des schémas développés suivant la coupe XI-XI de la figure 10 correspondant à diverses positions de fonctionnement du distributeur de cette figure 10 ;

la figure 16 est un schéma de principe d'une autre variante de distributeur selon l'invention ; et

les figures 17 à 21 représentent divers diagrammes de caractéristiques pression/couple que l'on peut obtenir avec l'agencement de distributeur selon le schéma de la figure 16.

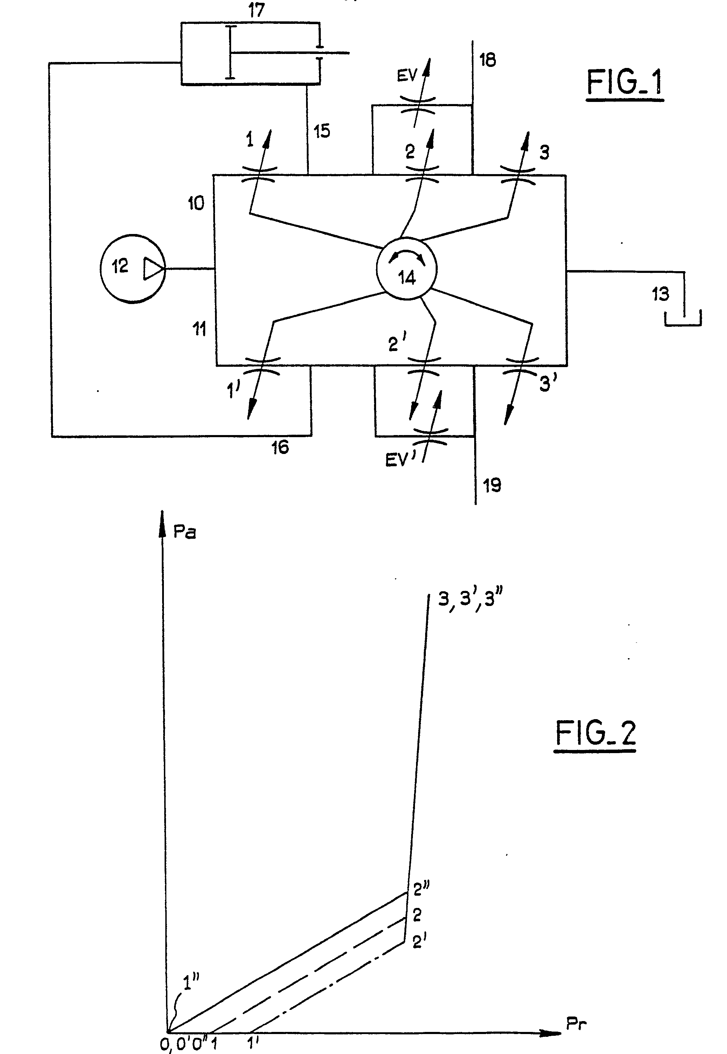

La figure 1 représente le schéma d'un distributeur hydraulique à centre ouvert qui comprend deux circuits en parallèle 10 et 11 entre une source de fluide sous pression 12 et un retour ou une bâche 13, et comportant chacun trois moyens de valve en série 1, 2, 3 et 1', 2', 3', respectivement, commandés simultanément comme le décrira plus loin, par un organe de commande unique 14. Entre les moyens de valve ou étranglements 1, 2 et 1', 2' de chaque circuit, partent des conduites 15, 16 qui aboutissent aux extrémités respectives d'un vérin d'assistance à double effet. Parallèlement aux seconds étranglements 2 et 2' sont disposés des quatrièmes moyens de valve ou restrictions variables EV et EV', respectivement, de telle sorte que leurs débits de passage viennent s'ajouter aux seconds étranglements 2 et 2'. Entre chaque paire d'étranglements 2 et 3 (respectivement 2' et 3') partent des conduits 18 et 19 qui aboutissent à deux dispositifs de réaction hydraulique ayant pour but d'appliquer à l'organe de commande 14 une réaction proportionnelle à l'effort de commande qui lui est appliqué.

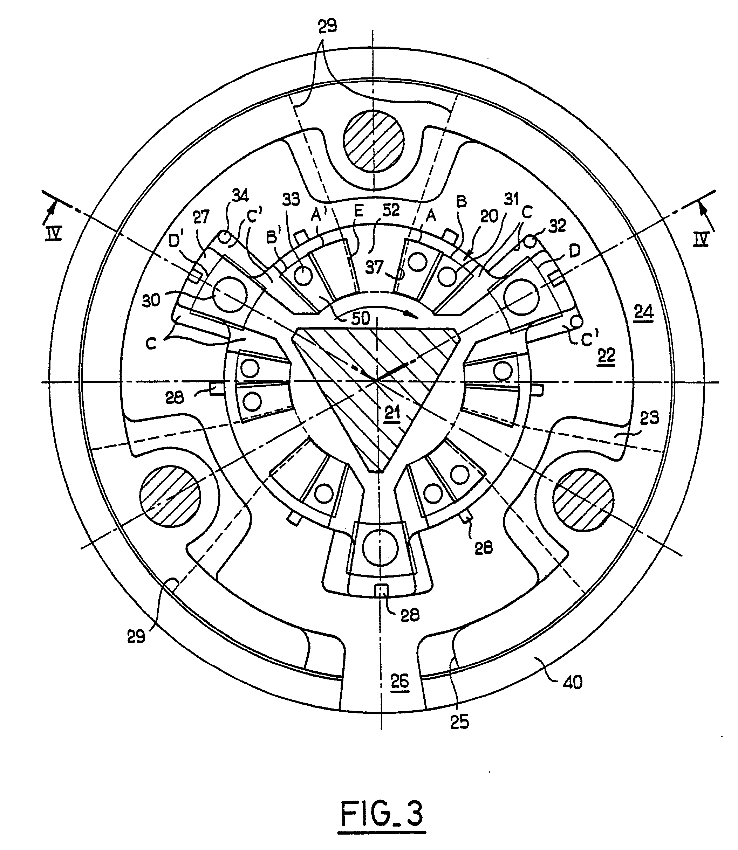

Pour faciliter l'explication, on supposera que le distributeur fait partie d'un système de direction assistée pour véhicules automobiles, et qu'il est constitué par une valve en étoile, telle que représentée sur les figures 3 à 7, du type de celle décrite dans la demande de brevet européen 0 021 970 au nom de la demanderesse.

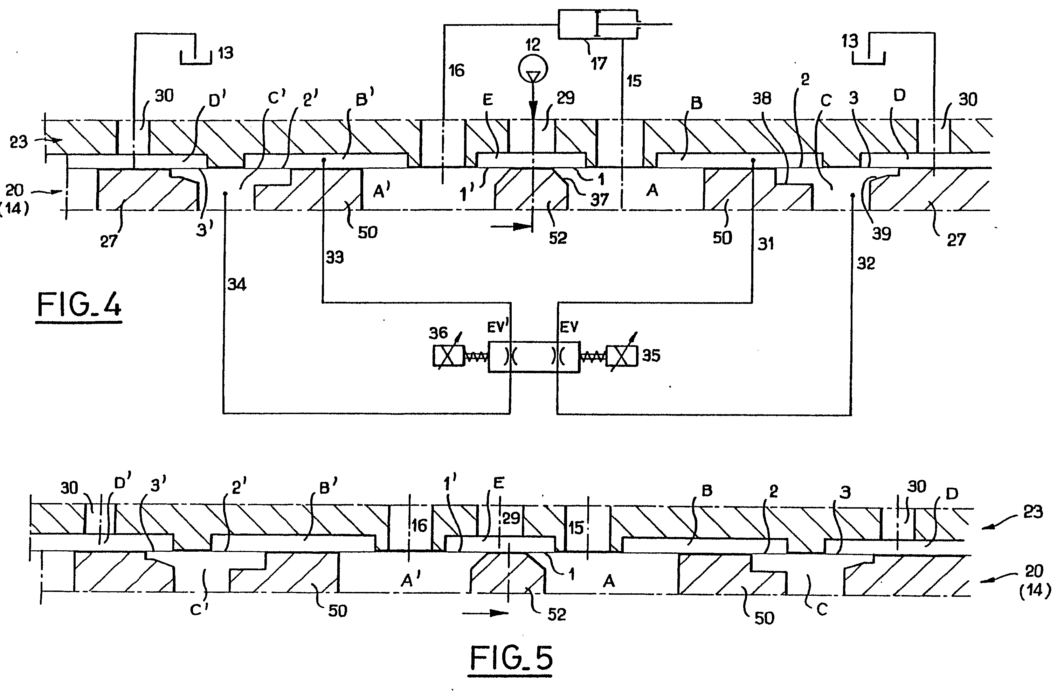

La valve en étoile des figures 3 à 7 comprend un rotor plat en étoile 20, couplé centralement à un arbre de section triangulaire 21 commandé par le volant de direction, reçu en pivotement dans une cavité discoïde d'un stator constitué classiquement d'une pièce annulaire centrale 22 flanquée de deux plaques ou disques latéraux 23 qui s'ajustent sur les faces latérales opposées correspondantes de la pièce annulaire centrale. L'ensemble du stator est monté dans un boîtier fixe 24 de façon à pouvoir y effectuer une rotation limitée définie par les deux faces en regard d'une fenêtre radiale 25 du stator dans laquelle est reçu avec jeu un doigt radial 26 du stator. Le rotor 20 comporte des branches de réaction de grand rayon 27 reçue dans des cavités du stator 20 (pièce centrale 22) en définissant dans ces cavités des chambres de réaction correspondantes C et C' de part et d'autre de chaque branche. Classiquement, divers joints 28 sont prévus pour isoler hydrauliquement les différentes chambres fonctionnelles utiles au fonctionnement de la valve, comme on peut le voir de façon plus détaillée sur les figures 4 à 7.

Comme on le voit bien sur les figures 3 et 4, une lumière d'entrée E est formée en creux dans les parois en regard des plaques latérales 23 en vis-à-vis des faces opposées du rotor 20, dans une position centrée entre deux branches de réaction 27 adjacentes pour recevoir le fluide de la source de la pression 12 par le conduit 29. D'une façon similaire, des deux côtés de chaque lumière d'entrée E sont formées dans les parois en regard des plaques 23, deux lumières intermédiaires sensiblement identiques B et B', et en plus de celles-ci, deux lumières supplémentaires identiques d'échappement D et D' d'où partent les conduites de retour 30 vers la bâche 13. Des cavités sont formées dans les faces du rotor entre des branches de ce dernier qui délimitent de façon similaire des chambres A et A' adjacentes à la lumière E du stator, à cheval des lumières E et B (E et B'), et des chambres C et C' à cheval ou en travers des lumières B et D et B' et D', respectivement, les chambres adjacentes A et C (ou A' et C') étant séparées l'une de l'autre par une branche intermédiaire 50 du rotor. Des conduits 31 et 32 partent de la lumière B et de la chambre C et sont reliés aux extrémités opposées de la restriction variable EV tandis que des conduits similaires 33 et 34 partent de la cavité B' et de la chambre C' vers la restriction variable EV' ; sur la figure 4, on a supposé que les deux restrictions variables EV et EV' forment un bloc et sont pilotées par des solénoïdes 35 et 36, respectivement commandés par des signaux électriques provenant d'un dispositif de commande extérieur (non représenté).

Sur la figure 4, on peut voir clairement comment les moyens de valve ou étranglements 1-3 et 1'-3' décrits sur la figure 1 sont formés respectivement entre les parties 20 et 23 (rotor et stator) du distributeur en étoile. En partant de la lumière d'entrée centrale E, où arrive le fluide sous pression par le conduit 29 (à laquelle fait face une branche courte d'entrée 52 du rotor), et en progressant vers la droite, c'est-à-dire dans le sens de circulation du fluide de ce côté de la valve, on trouve en premier lieu l'étranglement 1 formé par le bord en équerre de la lumière E et un chanfrein 37 du bord radial adjacent de la chambre A du rotor. Dans la chambre C, le bord en degré gauche 38 forme l'étranglement 2 avec le bord adjacent de la lumière B du stator 23 et le bord droit, profilé en rampe 39, forme l'étranglement 3 avec le bord adjacent de la lumière d'échappement D. Les autres bords non mentionnés ne forment pas d'étranglements de commande et n'ont aucun effet sur le fonctionnement du système dans ce sens. A la gauche de la lumière d'entrée E, la disposition des bords coopérants est symétrique à celle qui vient d'être décrite, de sorte que l'ensemble forme les deux circuits parallèles 10 et 11 décrits plus haut.

Cette disposition est clairement représentée sur la figure 3, où l'on voit qu'il existe par exemple trois groupes de moyens de valve du même genre répartis angulairement autour de la périphérie du distributeur en étoile.

Le distributeur décrit permet de moduler extérieurement le point central de fonctionnement comme on le verra ; il offre une réaction maximale et pratiquement constante dans la zone de travail de couple d'entrée maximum (figure 2) fournie par un ressort en C 40 disposé autour de la valve et dont les extrémités s'appliquent avec une charge prédéterminée contre les flancs opposés du doigt 26 du stator 22 et, en même temps, contre une butée de centrage (non représentée) placée axialement immédiatement derrière ledit doigt et qui fait partie du boîtier du stator. Si l'on suppose que les deux restrictions variables EV et EV' produisent en position de repos un étranglement donné et constant, et que leurs dispositifs de commande électromagnétiques 35 et 36 sont maintenus désexcités, le fonctionnement du distributeur est représenté par la courbe 0-1-2-3 du diagramme de la figure 2 qui illustre la relation entre la pression effective appliquée au mécanisme de commande de servo-assistance 17 en fonction du couple d'entrée et où l'on distingue trois zones de fonctionnement ; position initiale, correspondant à la conduite en ligne droite, représentée par la portion 0-1 de la courbe caractéristique ; position de conduite, correspondant à la conduite normale en courbes faiblement accentuées, représentée par la portion 1-2 ; et position de manœuvre représentée par la portion 2-3, correspondant à la conduite en courbes très fortes ou en manœuvres de parking. La position de repos est définie par le point 0 de la caractéristique et est appelée position centrale.

Dans cette position centrale 0 (illustrée sur la figure 4), le fluide provenant de la pompe 12 est distribué proportionnellement des deux côtés de l'entrée (lumière E) et traverse les étranglements 1, 2 et 3 (et EV, en parallèle avec 2) dans un sens, et les étranglements 1', 2' et 3' (et EV', en parallèle avec 2') dans le sens opposé, c'est-à-dire respectivement vers la droite ou vers la gauche sur la figure 4. La pression du fluide en circulation est appliquée de façon égale sur les deux côtés de chaque branche de réaction 27, de sorte que le couple de réaction appliqué est nul.

Lorsque l'on actionne le volant de direction, le rotor 20 tourne par rapport au stator, par exemple suivant les flèches sur les figures 4 et 5. Lorsque le rotor 20 quitte la position de repos (Fig. 5), les étranglements 3' et 2 et EV entrent en jeu de façon à maintenir constantes et égales les pressions dans les chambres A et A' et à ce qu'il n'y ait pas d'assistance fournie par le mécanisme d'actionnement 17. Néanmoins, la pression dans la chambre C' augmente par rapport à celle de la chambre C, c'est-à-dire que les différentes branches de réaction qui séparent lesdites chambres sont soumises à une pression plus élevée sur leurs faces orientées dans le sens horaire par rapport à la figure 5, et qu'il se produit donc contre elles une réaction hydraulique dans le sens anti-horaire qui est transmise au volant par le rotor 20 et l'arbre 21. Cette phase de fonctionnement est définie sur la figure 2 par la portion 0-1.

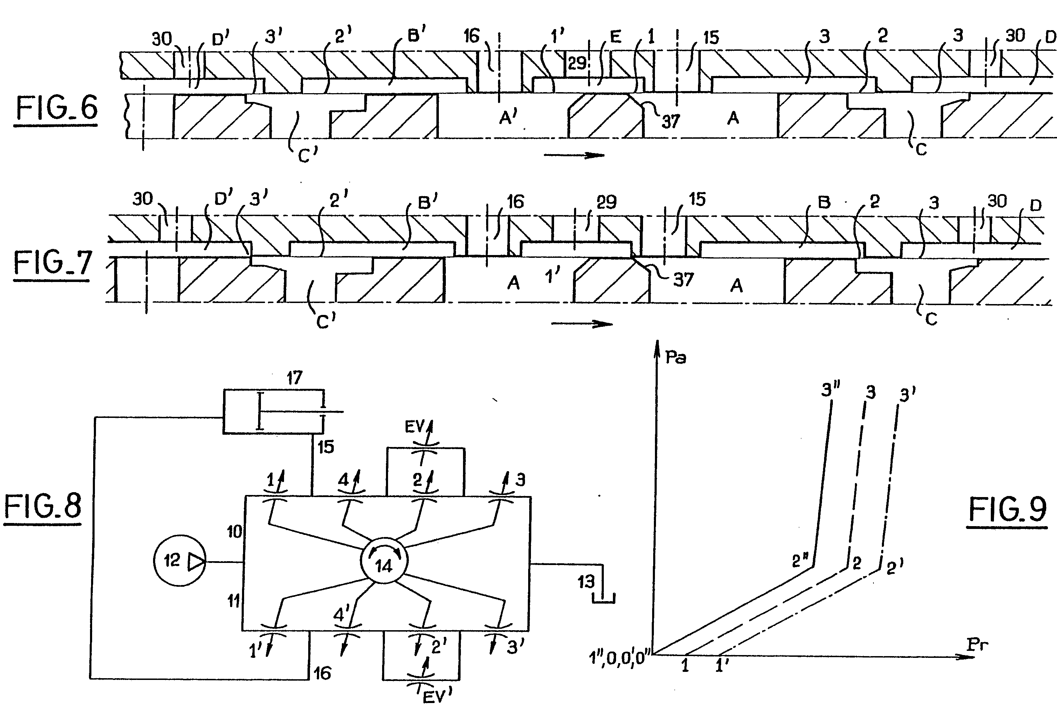

En poursuivant la rotation du volant, le chanfrein 37 se rapproche du bord latéral adjacent de la lumière E (figure 6), de sorte que l'étranglement 1 entre à son tour en jeu. Dans ces conditions, la pression commence à augmenter dans la zone comprise entre les étranglements 1 et 3' (à gauche de la lumière d'entrée E), cette pression étant transmise par le conduit 16 au côté gauche du vérin d'actionnement 17 de manière que celui-ci soit déplacé dans le sens correspondant. Comme cette augmentation de pression existe également dans la chambre C', il se produit contre chaque branche de réaction 27 une augmentation de la réaction Pr directement proportionnelle à la pression d'assistance Pa. L'accroissement du couple de commande déplace le point de travail du système le long de la portion 1-2 de la caractéristique. En arrivant au point 2, les branches de réaction 27 viennent en butée contre les parois d'extrémité (du stator) des chambres C' où elles se déplacent (Figure 7). A partir de ce moment, le ressort 40 est mis en œuvre, du fait que le doigt 26 du stator 22 commence à entraîner l'extrémité correspondante du ressort, c'est-à-dire que la valeur du couple en position 2 est déterminée par la charge du ressort, et l'augmentation du couple dans ces conditions se produit en fonction de l'élasticité dudit ressort.

Le comportement décrit correspond pratiquement à l'actionnement d'une valve sans modulation extérieure, si l'on considère comme constants les étranglements 3 et EV (c'est-à-dire avec une section de passage de fluide correspondante constante). Si, par contre, le solénoïde 35 de commande de la restriction EV est actionné de manière à augmenter la valeur de la section de passage de l'étranglement produit par EV, dans les mêmes conditions de fonctionnement, la perte de charge constituée par la somme de 3 et EV est inférieure, et la zone de réaction du point central sera plus étroite que précédemment. En conséquence, lorsque la valeur de la section de passage de EV augmente, la courbe 0-1-2-3 tend vers la courbe 0″-1″-2″-3″. Au contraire, si la valeur de la section de passage de EV est réduite, il y a déplacement de la caractéristique vers la courbe 0'-1'-2'-3', ce qui élargit ainsi la zone de réaction centrale.

Les solénoïdes 35 et 36 peuvent être contrôlés par tout moyen conventionnel adéquat sensible notamment à des conditions de marche du véhicule, par exemple par un ordinateur de bord qui commande les différentes fonctions de la marche d'un véhicule en fonction de paramètres ou circonstances déterminés de conduite ou de marche.

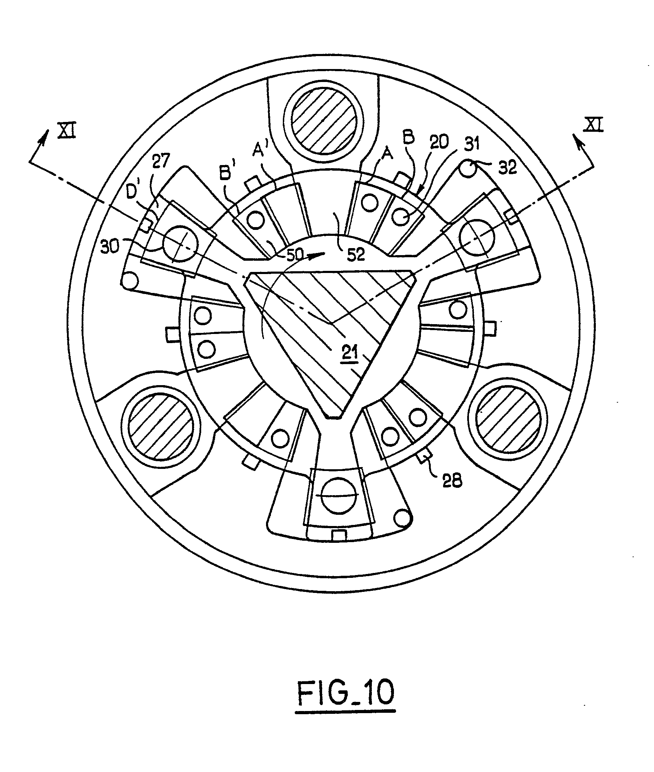

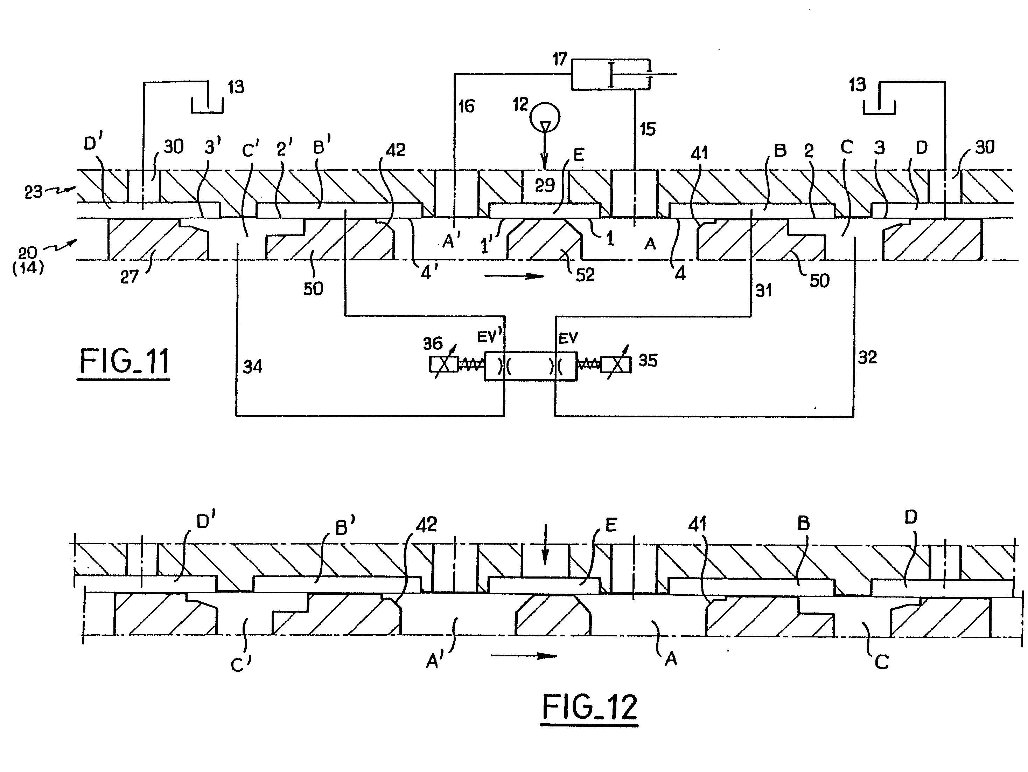

Les figures 8 à 15 représentent un autre mode de réalisation de l'invention. Le ressort en C 40 est ici supprimé et la réaction correspondant à la troisième zone 2-3 de la courbe caractéristique est contrôlée par un dispositif d'étranglement additionnel 4-4' situé entre les étranglements 1 et 2 (respectivement 1' et 2') du circuit de la figure 1, et définis respectivement par des chanfreins 41 et 42 au niveau de la séparation entre la chambre A et la cavité B d'une part (A' et B' d'autre part), comme représenté sur la figure 11 (le reste du distributeur demeurant par ailleurs identique à celui du mode de réalisation précédent).

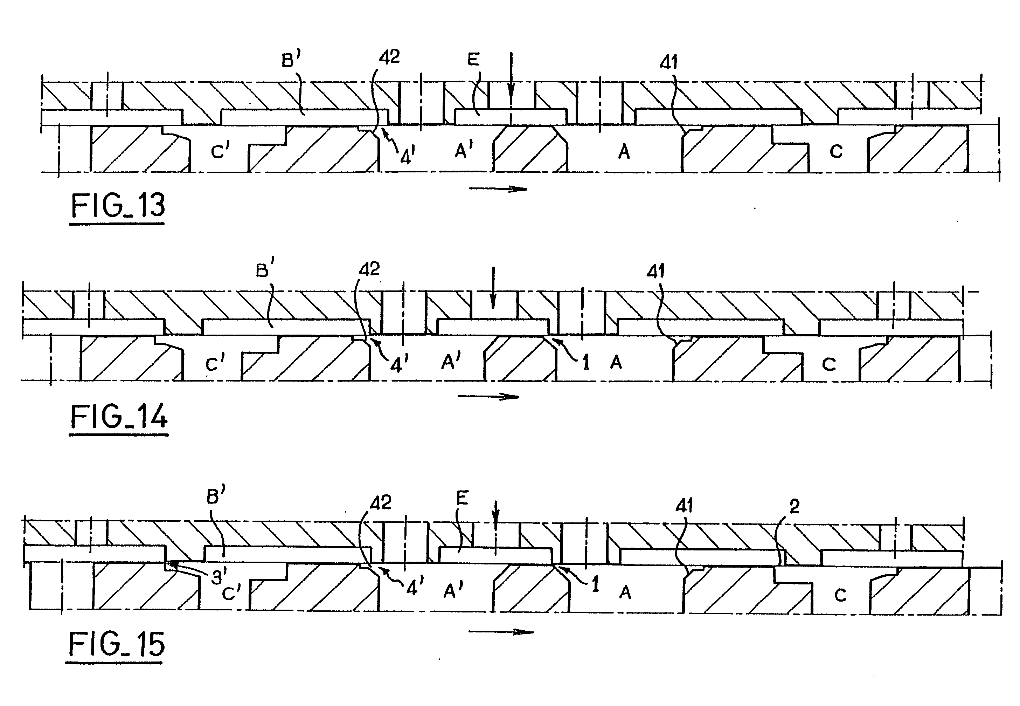

Le fonctionnement dans ce cas (figure 9) est identique à celui qui précède, pour ce qui concerne les zones initiales et de conduite (figures 11 et 12) ; à un moment donné de la zone de conduite 1-2 (point 2), le chanfrein 42 s'est toutefois suffisamment rapproché du bord adjacent de la lumière B' pour entrer en jeu, de sorte que à partir de cet instant, la pression d'assistance et la pression de réaction sont différenciées par la perte de charge qui se produit dans l'étranglement ainsi formé 4'. Dans ce but, le chanfrein 42 (41) est dimensionné de manière que la pression dans la chambre C' n'augmente que légèrement afin de stabiliser le fonctionnement du système, tandis que la pression dans la chambre A' continue d'augmenter et donc, en même temps, la pression d'assistance (Figures 13 et 14). En arrivant en position 3, on atteint la pression maximale du système : les étranglements 1 et 3' se referment complètement tandis que les étranglements 2 et 4' (ainsi que EV) se maintiennent entrouverts pour conserver la stabilité du système jusqu'au moment où la butée mécanique est atteinte.

De la même façon que dans le cas de l'agencement de la figure 1, la commande des restrictions modulables EV et EV' permet de décaler la caractéristique du distributeur qui, dans ce cas, adopte les allures représentées sur la figure 9, ce qui ne nécessite aucune explication complémentaire.

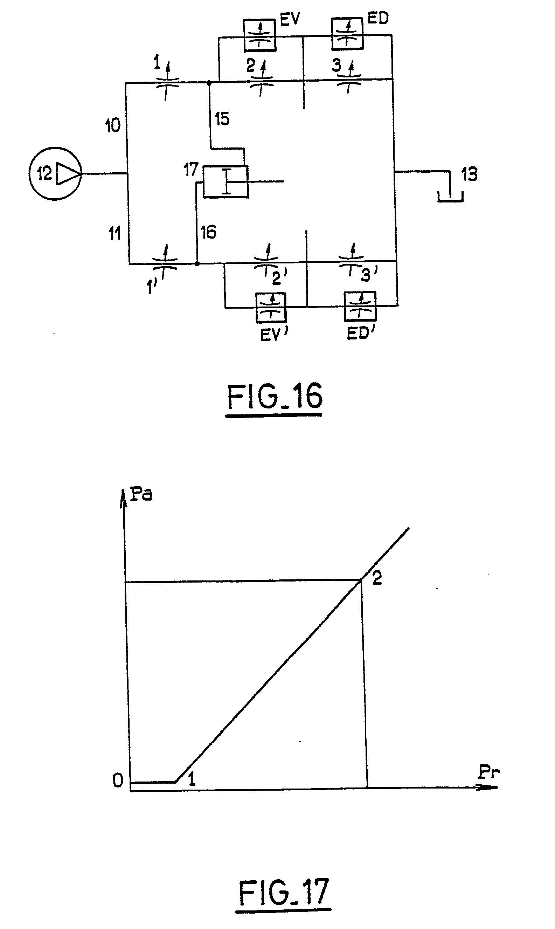

D'autres variantes sont possibles en suivant les mêmes principes exposés. Par exemple, comme représenté sur la figure 16, on peut introduire d'autres dispositifs d'étranglements extérieurs ED et ED' en parallèle avec les étranglements 3 et 3' de la figure 1, et les agencer de façon à pouvoir les contrôler comme décrit précédemment.

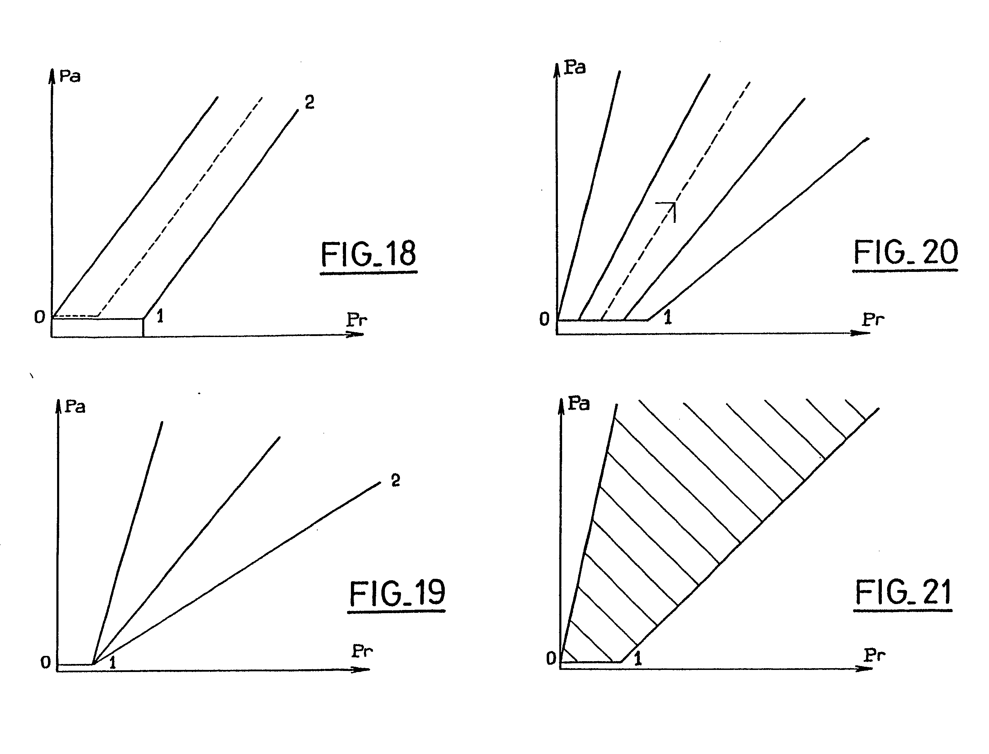

En supposant donc que le distributeur n'a plus de ressort assurant la réaction dans la (troisième) portion de manœuvre, on obtient alors, sans modulation des étranglements extérieurs, des réactions correspondant aux portions 0-1-2 de la caractéristique, comme représenté sur les figures 17 et 18. Néanmoins, les étranglements ED en parallèle avec les étranglements 3 et 3' permettent de faire varier la pente de la portion 1-2, comme illustré sur la figure 19, ce qui fait que, par une manœuvre simultanée des deux étranglements extérieurs ED et EV (ou EB' et EV'), il est possible d'obtenir différentes caractéristiques conformes à celles de la figure 20. Ainsi, en dosant de manière adéquate les actions des étranglements extérieurs, on peut obtenir n'importe quelle caractéristique comprise dans la zone hachurée de la figure 21.

## Revendications

1. Distributeur hydraulique, notamment pour système de direction assistée de véhicule, comprenant deux éléments coopérants (20, 23) déplaçables l'un par rapport à l'autre sous l'action d'un organe de commande (14, 21) et définissant au moins un circuit modulable (10 ; 11) établissant une communication entre une source de fluide sous pression (12) et une bâche (13), ce circuit comprenant en série un premier (1, 1'), un second (2 ; 2') et un troisième (3 ; 3') moyens de valve actionnés simultanément lors du déplacement relatif entre les deux éléments, la sortie du premier moyen de valve (1 ; 1') étant reliée (15 ; 16) à une extrémité d'un moteur hydraulique (17) contrôlé par le distributeur, et la sortie du second moyen de valve (2 ; 2') étant reliée (18 ; 19) à des moyens hydrauliques d'application d'une réaction sur l'organe de commande fournissant une caractéristique pression d'actionnement du moteur hydraulique/couple de commande appliqué à l'organe de commande avec une première portion initiale (0-1) de pente nulle et une seconde portion suivante (1-2) à pente déterminée, caractérisé en ce qu'il comporte, en parallèle avec le second moyen de valve (2, 2'), un quatrième moyen de valve modulable (EV ; EV') commandé par des moyens de commande extérieurs additionnels (35 ; 36) de façon à modifier sélectivement la position du point de transition entre les première et seconde portions de la caractéristique.

2. Distributeur hydraulique selon la revendication 1, caractérisé en ce qu'il comprend, disposé en série entre les premier (1 ; 1') et second (2 ; 2') moyens de valve, un cinquième moyen de valve (4 ; 4') actionné lors du déplacement relatif entre les deux éléments (20 ; 23) de façon à déterminer la pente d'une troisième portion (2-3) de la caractéristique à partir d'une valeur déterminée du couple de commande appliqué à l'organe de commande (14, 21) du distributeur.

3. Distributeur hydraulique selon la revendication 1 ou 2, caractérisé en ce qu'il comprend, en parallèle avec le troisième moyen de valve (3 ; 3'), un sixième moyen de valve modulable (ED ; ED') commandé par des moyens de commande extérieurs additionnels de façon à modifier sélectivement la pente de la deuxième portion (1-2) de la caractéristique.

4. Distributeur hydraulique selon l'une des revendications 1 à 3, du type où les deux éléments coopérants sont constitués respectivement d'un rotor en étoile (20) disposé dans une cavité discoïde formée dans un stator (23), le rotor étant couplé à l'organe de commande (21), des bords coopérants d'évidements (A, A' ; C, C' ; E ; B, B' ; D, D') formés dans les faces en regard du rotor et du stator formant des étranglements constituant lesdits premier (1 ; 1'), second (2 ; 2') et troisième (3 ; 3') moyens de valve, caractérisé en ce que le rotor (20) comprend des branches de réaction (27) associées à des lumières d'échappement (D, D') du stator, chaque branche de réaction séparant deux chambres de réaction (C ; C') chacune délimitée, du côté opposé, par une branche intermédiaire (50) associée à une lumière de passage intermédiaire (B ; B') du stator, le quatrième moyen de valve extérieur (EV ; EV') étant interposé dans un circuit (31, 32 ; 33, 34) reliant la chambre de réaction (C ; C') et la lumière de passage intermédiaire adjacente (B ; B').

5. Distributeur hydraulique selon la revendication 4, caractérisé en ce que le second moyen de valve (2 ; 2') est formé par un bord en degré (38) de la branche intermédiaire (50) délimitant la chambre de réaction (C ; C') et un bord adjacent de la lumière de passage intermédiaire correspondante (B ; B').

6. Distributeur hydraulique selon la revendication 2 et la revendication 5, caractérisé en ce que le cinquième moyen de valve (4 ; 4') est formé par un bord chanfreiné (41 ; 42) de la branche intermédiaire (50) opposé à la chambre de réaction (C ; C') et par le bord adjacent de la lumière de passage intermédiaire correspondante (B ; B').

7. Distributeur hydraulique selon l'une des revendications 4 à 6, caractérisé en ce que le troisième moyen de soupape (3 ; 3') est formé par le bord profilé en rampe (39) de la branche de réaction (27) et le bord adjacent de la lumière d'échappement correspondante (D ; D').

8. Distributeur hydraulique selon l'une des revendications 4 à 7, où le stator (23) est monté en rotation dans un boîtier fixe (24) en étant rappelé en position centrale par des organes élastiques (40), caractérisé en ce que le stator (23) comporte une partie en saillie radiale (26) reçue avec jeu dans une fenêtre (25) du boîtier (24), et en ce que les organes élastiques sont constitués par un ressort en C (40) dont les extrémités s'appliquent contre les côtes opposées de la partie en saillie (26) et d'une butée de centrage du boîtier, le ressort fournissant une réaction pour déterminer une troisième portion (2-3) de la caractéristique correspondant aux pressions d'assistance les plus élevées.

## Claims

1. Hydraulic distributing valve particularly for use in power steering equipment of a vehicle, comprising two cooperating distributing elements (20, 23) adapted for relative movement in response to actuation of an operating member (14, 21), said elements defining at least one controllable fluid path (10 ; 11) establishing a connection between a pressure fluid source (12) and low pressure fluid collecting means (13), said fluid path including a series connection of first (1 ; 1'), second (2 ; 2') and third (3 ; 3') control means being simultaneously actuated, when there is relative movement between the two control elements, the outlet of said first control means (1 ; 1') being connected (15 ; 16) to one side of a hydraulic motor (17) being controlled by the distributing valve, while the outlet of the second control means (2 ; 2') is connected (18 ; 19) to a hydraulic reaction force generator acting on the operating element so as to provide a characteristic curve of the energizing pressure of the hydraulic motor *versus* the control torque exerted onto the operating element having a first initial portion (0-1) of slope zero and a second, succeeding portion (1-2) of finite slope, characterized in that it comprises fourth controllable control means (EV ; EV') connected in parallel across the second control means (2 ; 2') and actuated by additional exterior actuating means (35 ; 36) so as to selectively modify the position of the point of transition defined between said first and second portions of the characteristic curve.

2. The distributing valve as in claim 1, characterized in that fifth control means (4 ; 4') are connected in series between said first (1 ; 1') and second (2 ; 2') control means being actuated, when there is relative movement between the two control elements (20 ; 23) so as to define the slope of a third portion (2-3) of the characteristic curve starting from a given value of the actuating torque applied to the operating member (14, 21) of the distributing valve.

3. The distributing valve as in claim 1 or 2, characterized in that sixth controllable control means (ED ; ED') are connected in parallel across the third control means (3 ; 3') being actuated by additional exterior actuating means so as to selectively modify the slope of the second portion (1-2) of the characteristic curve.

4. The distributing valve as in one of claims 1 to 3, wherein the two cooperating control elements are respectively formed by a star-shaped rotor (20) arranged in a disc-shaped cavity formed in a stator (23), said rotor being coupled to the operating member (21), by cooperating edges of recesses (A, A' ; C, C' ; E ; B, B' ; D, D') formed in the facing surface of the rotor and the stator defining restrictous forming said first (1 ; 1'), second (2 ; 2') and third (3 ; 3') control means, characterized in that the rotor (20) comprises reaction arms (27) associated to the outlet ports (D, D') of the stator, each reaction arm separating two reaction chambers (C ; C'), the opposite end face of each such reaction chamber being defined by an intermediary arm associated to an intermediate passage port (B ; B') of the stator, said forth exterior control means (EV ; EV') being arranged in a fluid path (31, 32 ; 33, 34) interconnecting the reaction chamber (C ; C') and the intermediary passage port (B ; B').

5. The distributing valve as in claim 4, characterized in that said second control means (2 ; 2') are formed by a stepped edge portion (38) of the intermediary arm (50) delimiting the reaction chamber (C ; C') and the adjacent edge of the corresponding intermediary passage port (B ; B').

6. The distributing valve as in claim 2 and 5, characterized in that said fifth control means (4 ; 4') are formed by a chamfered edge (41 ; 42) of the intermediary arm (50) opposing the reaction chamber (C ; C') and the adjacent edge of the corresponding intermediary passage port (B ; B').

7. The distributing valve as in one of claims 4 to 6, characterized in that said third control means (3 ; 3') are formed by the ramp-shaped edge (39) of the reaction arm (27) and the adjacent edge of the corresponding outlet port (D ; D').

8. The distributing valve as in one of claims 4 to 7, wherein the stator (23) is mounted in a stationary housing (24) for rotational movement being biased into a central position by elastic means (40), characterized in that the stator (23) comprises a radially projecting portion (26) being received in a window (25) of said housing (24) under play conditions and in that the elastic means are formed by a C-shaped spring (40), the ends of which engage against the opposing sides of the projecting portions (26) and by a centering abutment portion of the housing, the spring providing a reaction force defining a third portion (2-3) of the characteristic curve corresponding to the largest values of the servo pressure.

**Patentansprüche**

1. Hydraulischer Verteiler, insbesondere für eine Lenkhilfe eines Fahrzeuges, mit zusammenarbeitenden Verteilerelementen (20, 23), die durch ein Betätigungsglied (24, 21) relativ zueinander verlagerbar sind und mindestens einen modulierbaren Strömungsweg (10 ; 11) vorgeben, über welchen eine Verbindung zwischen einer Druckmittelquelle (12) und einer Druckmittelsenke (13) herstellbar ist, wobei dieser Strömungsweg in Reihe geschaltet erste (1 ; 1'), zweite (2 ; 2') und dritte (3 ; 3') Steuermittel aufweist und diese Steuermittel bei einer Relativbewegung zwischen den beiden Verteilerelementen (20, 23) gleichzeitig betätigt werden, wobei der Ausgang der ersten Steuermittel (1 ; 1') mit dem einen Ende eines durch den Verteiler gesteuerten hydraulischen Motors (17) verbunden (15 ; 16) ist und der Ausgang der zweiten Steuermittel (2 ; 2') mit einem hydraulischen Reaktionskrafterzeuger (27, C, C') verbunden (18, 19) ist, der auf das Betätigungsglied (14) zurückwirkt und eine solche Kennlinie zwischen dem Speisedruck für den hydraulischen Motor (17) und dem auf das Betätigunsglied (14) ausgeübten Betätigungs-Drehmoment gewährleistet, bei welcher ein Anfangsabschnitt (0-1) die Steigung Null und ein hierauf folgender zweiter Abschnitt (1-2) eine vorgegebene Steigung aufweist, dadurch gekennzeichnet, daß parallel zu den zweiten Steuermitteln (2 ; 2') vierte, modulierbare Steuermittel (EV ; EV') vorgesehen sind, welche durch zusätzliche externe Stellmittel (35 ; 36) derart betätigbar sind, daß die Lage des Übergangspunktes zwischen dem ersten und zweiten Abschnitt der Kennlinie wahlweise verschiebbar ist.

2. Verteiler nach Anspruch 1, dadurch gekennzeichnet, daß in Reihe zwischen den ersten (1 ; 1') und zweiten (2 ; 2') Steuermitteln fünfte (4 ; 4') Steuermittel vorgesehen sind, die bei einer Relativbewegung zwischen den beiden Verteilerelementen (20, 23) derart betätigt werden, daß die Steigung eines dritten Abschnittes (2-3) der Kennlinie vorgegeben wird, der bei einem vorgegebenen Wert des Drehmomentes beginnt, welches auf das Betätigungsglied (14, 21) des Verteilers ausgeübt wird.

3. Verteiler nach Anspruch 1 oder 2, dadurch gekennzeichnet, daß parallel zu den dritten Steuermitteln (3 ; 3') sechste modulierbare Steuermittel (ED ; ED') vorgesehen sind, die durch zusätzliche externe Stellmittel derart betätigt werden, daß die Steigung des zweiten Abschnittes (1-2) der Kennlinie wahlweise abgeändert wird.

4. Verteiler nach einem der Ansprüche 1 bis 3, bei welchem die zusammenarbeitenden Verteilerelemente gebildet sind durch einen sternförmigen Rotor (20), der in einer scheibenförmigen Kammer angeordnet ist, die ihrerseits in einem Stator (23) ausgebildet ist, wobei der Rotor mit dem Betätigungsglied (21) gekuppelt ist und wobei zusammenarbeitende Kanten von Ausnehmungen (A, A' ; C, C' ; E ; B, B' ; D, D'), die in den gegenüberliegenden Flächen von Rotor und Stator ausgebildet sind, Drosselstellen bilden, welche die ersten (1 ; 1'), zweiten (2 ; 2') und dritten (3 ; 3') Steuermittel bilden, dadurch gekennzeichnet, daß der Rotor (20) Reaktionsarme (27) aufweist, die den Auslaßöffnungen (D, D') des Stators zugeordnet sind, wobei jeder der Reaktionsarme zwei Reaktionskammern (C ; C') voneinander trennt, die jeweils auf der gegenüberliegenden Seite durch einen Zwischenarm begrenzt sind, der einer Zwischenauslaßkanalöffnung (B ; B') des Stators zugeordnet ist, und wobei die vierten externen Steuermittel (EV ; EV') in einem Strömungsweg (31, 32 ; 33, 34) angeordnet sind, welcher die Reaktionskammer (C ; C') und die benachbarte Zwischenauslaßkanalöffnung (B ;

B') verbindet.

5. Verteiler nach Anspruch 4, dadurch gekennzeichnet, daß die zweiten Steuermittel (2 ; 2') durch einen Stufenrand (38) des Zwischenarmes (50), welcher die Reaktionskammern (C ; C') begrenzt sowie, einen benachbarten Rand der zugeordneten Zwischenauslaßkanalöffnung (B ; B') gebildet sind.

6. Verteiler nach Anspruch 2 und 5, dadurch gekennzeichnet, daß die fünften Steuermittel (4 ; 4') durch einen schrägen Rand (41 ; 42) des Zwischenarmes (50) welcher der Reaktionskammer (C ; C') gegenüberliegt und den benachbarten Rand der entsprechenden Zwischenauslaßkanalöffnung (B ; B') gebildet sind.

7. Verteiler nach einem der Ansprüche 4 bis 6, dadurch gekennzeichnet, daß die dritten Steuermittel (3 ; 3') durch einen rampenförmig profilierten Rand (39) des Reaktionsarmes (27) und den benachbarten Rand der zugeordneten Auslaßöffnung (D ; D') gebildet sind.

8. Verteiler nach einem der Ansprüche 4 bis 7, bei welcher der Stator (23) drehbar in einem feststehenden Gehäuse (24) angeordnet ist, wobei er durch elastische Mittel (40) in eine zentrale Stellung vorgespannt ist, dadurch gekennzeichnet, daß der Stator (23) einen radial vorspringenden Abschnitt (26) aufweist, der unter Spiel in einem Fenster (25) des Gehäuses (24) Aufnahme findet, und daß die elastischen Mittel durch eine C-förmige Feder (40), deren Enden sich gegen die einander gegenüberliegenden Seiten des vorspringenden Abschnittes (26) legen, und einen Zentrieranschlag des Gehäuses gebildet sind, wobei die Feder eine Reaktionskraft bereitstellt, durch welche ein dritter Abschnitt (2-3) der Kennlinie vorgegeben wird, welcher den höchsten Servodrucken entspricht.

FIG_1

FIG_2

# FIG. 3

FIG.4

FIG.5

0 072 731

0 072 731

FIG_6

FIG_7

FIG.8

FIG.9

4

FIG_10

FIG_11

FIG_12

0 072 731

FIG_13

FIG_14

FIG_15

FIG. 16

FIG. 17

FIG_18

FIG_19

FIG_20

FIG_21